# EUROPEAN PATENT APPLICATION

(11) **EP 4 749 908 A1**
(43) Date of publication of application: **27.05.2026**
(21) Application number: 25207344.0
(22) Date of filing: 07.10.2025
(51) Int. Cl.: H02M 7/00, H02G 5/00, H02G 5/06, H02M 7/487

(54) **SYSTEMS FOR CAPACITOR ASSEMBLY FOR MULTI-LEVEL INVERTER FOR ELECTRIC VEHICLE**

(30) Priority: 21.11.2024 US 202418955338
(71) Applicant: BorgWarner Inc., Auburn Hills, MI 48326 (US)
(72) Inventor: UGARE, Chetan, Nuremberg (DE); APELSMEIER, Andreas, Pollenfeld (DE); BERINDAN, Stefan, Oberasbach (DE)
(74) Representative: Office Freylinger

(57) **Abstract**

A system includes an inverter to convert DC power from a battery to AC power to drive a motor, wherein the inverter includes: a capacitor assembly including: a first busbar; a second busbar; a third busbar between the first busbar and the second busbar; and one or more capacitors connected to one or more of the first busbar, the second busbar, or the third busbar.

## Description

### TECHNICAL FIELD

Various embodiments of the present disclosure relate generally to a capacitor assembly, and more particularly, to systems for a capacitor assembly for a multi-level inverter for an electric vehicle.

### BACKGROUND

Inverters, such as those used to drive a motor in an electric vehicle, for example, are responsible for converting Direct Current (DC) into Alternating Current (AC) to drive the motor. Some inverters may generate an output voltage including a high level of harmonics and a relatively low efficiency at a higher switching frequency.

The present disclosure is directed to overcoming one or more of these above-referenced challenges.

### SUMMARY OF THE DISCLOSURE

In some aspects, the techniques described herein relate to a system including an inverter to convert DC power from a battery to AC power to drive a motor, wherein the inverter includes: a capacitor assembly including: a first busbar; a second busbar; a third busbar between the first busbar and the second busbar; and one or more capacitors connected to one or more of the first busbar, the second busbar, or the third busbar.

In some aspects, the techniques described herein relate to a system, wherein the first busbar is a positive DC power busbar, the second busbar is a negative DC power busbar, and the third busbar is a neutral power busbar.

In some aspects, the techniques described herein relate to a system, wherein the inverter is a multi-level inverter.

In some aspects, the techniques described herein relate to a system, wherein the one or more capacitors include: a first capacitor connected to the first busbar and the third busbar; and a second capacitor connected to the second busbar and the third busbar.

In some aspects, the techniques described herein relate to a system, wherein the capacitor assembly further includes a case, wherein the first capacitor and the second capacitor are provided in the case.

In some aspects, the techniques described herein relate to a system, wherein the first capacitor is arranged in a first row and the second capacitor is arranged in a second row.

In some aspects, the techniques described herein relate to a system, wherein the inverter further includes: a power module connected to the capacitor assembly.

In some aspects, the techniques described herein relate to a system, wherein the one or more capacitors are on a same side of the first busbar, the second busbar, and the third busbar.

In some aspects, the techniques described herein relate to a system, wherein the one or more capacitors include abobbin with a longitudinal axis in the one or more capacitors that is in parallel with a longitudinal axis of each of the first busbar, the second busbar, and the third busbar.

In some aspects, the techniques described herein relate to a system, further including: the battery configured to supply the DC power to the inverter; and the motor configured to receive the AC power from the inverter to drive the motor, wherein the system is provided as a vehicle including the inverter, the battery, and the motor.

In some aspects, the techniques described herein relate to a system including a capacitor assembly, the capacitor assembly including: a first busbar; a second busbar; a third busbar between the first busbar and the second busbar; and one or more capacitors connected to one or more of the first busbar, the second busbar, or the third busbar.

In some aspects, the techniques described herein relate to a system, wherein the system further includes: a power module connected to the capacitor assembly.

In some aspects, the techniques described herein relate to a system, wherein the power module includes a first tab connected to the first busbar, a second tab connected to the second busbar, and a third tab connected to the third busbar.

In some aspects, the techniques described herein relate to a system, wherein the one or more capacitors include: a first capacitor and a second capacitor connected to the first busbar and the third busbar, and a third capacitor and a fourth capacitor connected to the second busbar and the third busbar.

In some aspects, the techniques described herein relate to a system, wherein: the first busbar includes a first opening, the second busbar includes a second opening, and the third busbar includes a third opening, and the one or more capacitors includes a bobbin that extends through the first opening, the second opening, and the third opening and connects to the first busbar.

In some aspects, the techniques described herein relate to a system, wherein: the one or more capacitors include a first capacitor, a second capacitor, a third capacitor, and a fourth capacitor; and each of the first capacitor, the second capacitor, the third capacitor, and the fourth capacitor is connected to the second busbar.

In some aspects, the techniques described herein relate to a system including a busbar assembly for an inverter, the busbar assembly including: a first busbar; a second busbar; and a third busbar between the first busbar and the second busbar.

In some aspects, the techniques described herein relate to a system, wherein the first busbar includes one or more first openings, the second busbar includes one or more second openings, and the third busbar includes one or more third openings.

In some aspects, the techniques described herein relate to a system, wherein: the first busbar includes a first capacitor connector; the second busbar includes a second capacitor connector extending through the one or more first openings and the one or more second openings; and the third busbar includes a third capacitor connector extending through the one or more first openings.

In some aspects, the techniques described herein relate to a system, wherein: the first busbar is a positive DC power busbar for the inverter; the second busbar is a negative DC power busbar for the inverter; and the third busbar is a neutral power busbar for the inverter.

In some aspects, the techniques described herein relate to a system including an inverter to convert DC power from a battery to AC power to drive a motor, wherein the inverter includes: a capacitor assembly including: a first group of capacitors connected to one or more power modules, wherein the first group of capacitors are used when the one or more power modules operate as a two-level inverter; and a second group of capacitors connected to the one or more power modules, wherein the second group of capacitors are used when the one or more power modules operate as a three-level inverter or as the two-level inverter.

In some aspects, the techniques described herein relate to a system, wherein the inverter is a T-type multi-level inverter operable as the two-level inverter and the three-level inverter.

In some aspects, the techniques described herein relate to a system, wherein the capacitor assembly further includes a case, wherein the first group of capacitors and the second group of capacitors are provided in the case.

In some aspects, the techniques described herein relate to a system, wherein: the capacitor assembly further includes: a first busbar; a second busbar; and a third busbar between the first busbar and the second busbar, the first group of capacitors are connected to the first busbar and the second busbar, and the second group of capacitors are connected to the first busbar, the second busbar, and the third busbar.

In some aspects, the techniques described herein relate to a system, wherein the first busbar is a positive DC power busbar, the second busbar is a negative DC power busbar, and the third busbar is a neutral power busbar.

In some aspects, the techniques described herein relate to a system, wherein the second group of capacitors includes: a first capacitor connected to the first busbar and the third busbar; and a second capacitor connected to the second busbar and the third busbar.

In some aspects, the techniques described herein relate to a system, wherein the first group of capacitors are arranged in a first row and the second group of capacitors are arranged in a second row.

In some aspects, the techniques described herein relate to a system, wherein the first group of capacitors and the second group of capacitors are alternately arranged in a single row.

In some aspects, the techniques described herein relate to a system, wherein the inverter further includes: the one or more power modules connected to the capacitor assembly.

In some aspects, the techniques described herein relate to a system, further including: the battery configured to supply the DC power to the inverter; and the motor configured to receive the AC power from the inverter to drive the motor, wherein the system is provided as a vehicle including the inverter, the battery, and the motor.

In some aspects, the techniques described herein relate to a system including a capacitor assembly, the capacitor assembly including: a first group of capacitors connected to one or more power modules, wherein the first group of capacitors are used when the one or more power modules operate as a two-level inverter; and a second group of capacitors connected to the one or more power modules, wherein the second group of capacitors are used when the one or more power modules operate as a three-level inverter or as the two-level inverter.

In some aspects, the techniques described herein relate to a system, wherein: the capacitor assembly further includes: a first busbar; a second busbar; and a third busbar between the first busbar and the second busbar, the first group of capacitors are connected to the first busbar and the second busbar, and the second group of capacitors are connected to the first busbar, the second busbar, and the third busbar.

In some aspects, the techniques described herein relate to a system, wherein a first current path between the one or more power modules and the first group of capacitors through the first busbar and the second busbar is shorter than a second current path between the one or more power modules and the second group of capacitors through the first busbar, the second busbar, and the third busbar.

In some aspects, the techniques described herein relate to a system, wherein: the first group of capacitors are rated at a first voltage; the second group of capacitors are rated at a second voltage; and the first voltage is greater than the second voltage.

In some aspects, the techniques described herein relate to a system, wherein the first group of capacitors are arranged so that a positive connection of a first capacitor in the first group of capacitors faces a negative connection of a second capacitor in the first group of capacitors.

In some aspects, the techniques described herein relate to a system, wherein the second group of capacitors are arranged so that a positive connection or a negative connection of a first capacitor in the second group of capacitors faces a neutral connection of a second capacitor in the second group of capacitors.

In some aspects, the techniques described herein relate to a system including a capacitor assembly for an inverter, the capacitor assembly including: a case; a first group of capacitors in the case for a two-level operation of the inverter; and a second group of capacitors in the case for a three-level or a two-level operation of the inverter.

In some aspects, the techniques described herein relate to a system, wherein: the capacitor assembly further includes a busbar assembly including: a positive DC power busbar; a negative DC power busbar; and a neutral power busbar between the positive DC power busbar and the negative DC power busbar, the first group of capacitors are connected to the positive DC power busbar and the negative DC power busbar, and the second group of capacitors are connected to the positive DC power busbar, the negative DC power busbar, and the neutral power busbar.

In some aspects, the techniques described herein relate to a system, wherein the first group of capacitors and the second group of capacitors are arranged between an interior surface of the case and the busbar assembly.

In some aspects, the techniques described herein relate to a system, wherein the first group of capacitors are arranged in a first row in the case and the second group of capacitors are arranged in a second row in the case.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed example embodiments.
FIG. 1 depicts an exemplary system infrastructure for a vehicle including a combined inverter and converter, according to one or more embodiments.
FIG. 2 depicts an electrical power schematic of a three phase inverter module, according to one or more embodiments.
FIG. 3 depicts an exemplary system infrastructure for an inverter controller, according to one or more embodiments.
FIG. 4A depicts an isometric view of a capacitor assembly, according to one or more embodiments.
FIG. 4B depicts a side view of the capacitor assembly of FIG. 4A, according to one or more embodiments.
FIG. 4C depicts an exploded view of the capacitor assembly of FIG. 4A, according to one or more embodiments.
FIG. 5 depicts a full three-level capacitor assembly including one row of bobbins, according to one or more embodiments.
FIG. 6 depicts a hybrid capacitor assembly with a +/N/- bobbin terminal configuration for a three-level functionality in a second row, according to one or more embodiments.
FIG. 7 depicts a hybrid capacitor assembly with an N/+/N/- bobbin terminal configuration for a three-level functionality in a second row, according to one or more embodiments.
FIG. 8 depicts a hybrid capacitor assembly with a single row configuration and a three bobbin per phase configuration, according to one or more embodiments.
FIG. 9 depicts a hybrid capacitor assembly with a three bobbin configuration for all phases, according to one or more embodiments.
FIG. 10 depicts a full three-level capacitor assembly with a two-row bobbin configuration, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to a capacitor assembly, and more particularly, to systems for a capacitor assembly for a multi-level inverter for an electric vehicle. Inverters, such as those used to drive a motor in an electric vehicle, for example, are responsible for converting Direct Current (DC) into Alternating Current (AC) to drive the motor. In some systems, two-level inverters have a simple structure and a relatively low cost of production. However, some two-level inverters may generate an output voltage including a high level of harmonics and a relatively low efficiency at a higher switching frequency.

Some systems include three-level inverter topology, which may address issues with two-level inverters, such as harmonics in output voltage and relatively low efficiency at a higher switching frequency. Some systems include a multi-level inverter topology, which may generate output voltage waveforms with lower harmonics to better resemble sinusoidal references, achieve a lower dv/dt, and achieve a lower electromagnetic interference (EMI) emissions. Some systems may include a T-type topology three-level inverter, which may be a suitable topology among multi-level inverters due to three-level output voltage capability and lesser number of switching devices.

In some systems, a traction inverter may include power modules, which may be considered an important part of an overall system. Efficiency of some systems may be directly proportional to losses occurring in the power modules of the systems. In some systems, addressing switching losses of power modules may be one critical aspect of having an efficient, cost effective, and robust inverter design. In some systems, commutation cell inductance of systems may limit improvements in the switching losses. In some systems, three major components that contribute to overall commutation cell inductance may include power modules, DC bulk capacitors, and busbar interconnections.

In one or more embodiments, a capacitor may be used in a three-level inverter functionality. In one or more embodiments, a single capacitor may replace two capacitors (e.g., C1 and C2) in a multi-level inverter configuration, with a single solution for a three-level functionality, which may facilitate a lower parasitic inductance by integration of two capacitors (e.g., C1 and C2) into a single bulk capacitor. In one or more embodiments, a bulk capacitor may include a planar busbar configuration to connect capacitors.

In one or more embodiments, a single hybrid solution capacitor may allow a two-level and/or a three-level inverter functionality, which may replace three capacitors (e.g., C1, C2, and C3) in a T-type multi-level inverter. In one or more embodiments, a single hybrid solution capacitor may include both a two-level and/or a three-level functionality, which may facilitate a lower parasitic inductance by integration of three capacitors (e.g., C1, C2, and C3) into a single bulk capacitor. In one or more embodiments, a bulk capacitor may include a planar busbar configuration to connect capacitors.

In some systems, integration of multiple separate capacitors (e.g., two or more capacitors) may represent a technical challenge. In some systems, conductor (e.g., cables) routing and/or connections of multiple capacitors may result in a relatively high inductance. In some systems, axial capacitor structure together with common (or most common) Y shape busbar connection may lead to a wider gap between positive and negative DC power busbars connecting parallel capacitors of bulk capacitors. This may lead to relatively high parasitic inductances in a bulk capacitor.

One or more embodiments may include an integration of two capacitors (e.g., C1 and C2) in one capacitor assembly. One or more embodiments may include an arrangement of capacitors connected to a combination of three planar busbars, for example, one positive DC power busbar, one negative DC power busbar, and one neutral power busbar, in a single DC bulk capacitor to allow planar arrangement of busbars for a three-level functionality, which may result in a reduction of parasitic inductance.

One or more embodiments may include a three planar busbar arrangement in a bulk capacitor, which may allow capacitors to connect to positive, negative, and neutral power busbars, which may facilitate three-level functionality configurations. In one or more embodiments, capacitors may be arranged to enable a full three-level functionality. In one or more embodiments, capacitors may have different configurations based on manufacturing constraints and/or designs, as well as on provided current paths. One or more embodiments may include one or more rows of capacitors.

One or more embodiments may provide solutions for a three-level DC link capacitor (or bulk capacitor). One or more embodiments may provide a DC link capacitor that may be manufactured using same (or similar) processes used to manufacture some two-level capacitors, which may be beneficial for manufacturing purposes. One or more embodiments may include a DC link capacitor that may be flexible and scalable for different voltage levels, capacitance values, and number of inverter levels.

One or more embodiments may provide a DC link capacitor that may be combined with a power switch to result in a relatively low parasitic inductance, which may enable higher (or relatively higher) switching speeds in a complete commutation loop. One or more embodiments may use a smaller space to combine two capacitors (e.g., C1 and C2) into a single DC bulk capacitor than a space used to arrange two separate capacitors, which may result in simplifying busbar routing and reduced parasitic inductances.

One or more embodiments may include a three-level capacitor functionality in a single bulk capacitor assembly. One or more embodiments may include a capacitor arrangement for obtaining a three-level functionality, while considering a shorter current path, as well as potential mechanical constraints provided by manufacturers. One or more embodiments may include a planar busbar arrangement for three-level inverters with connections of bulk capacitors.

One or more embodiments may include an integration of three capacitors (e.g., C1, C2, and C3) in one capacitor assembly. One or more embodiments may include an arrangement of capacitors connected to a combination of three planar busbars, for example, one positive DC power busbar, one negative DC power busbar, and one neutral power busbar, in a single DC bulk capacitor, which may allow planar arrangement of busbars that may allow a two-level functionality (or a two-level operation) and/or a three-level functionality (or a three-level operation), which may result in a reduction of parasitic inductance.

One or more embodiments may include a bulk capacitor with a first row of capacitors and/or a second row of capacitors. One or more embodiments may include a three planar busbar arrangement that may allow capacitors in a first row and/or second row to connect positive, negative, and neutral power busbars, which may facilitate different two-level functionality and/or three-level functionality configurations. One or more embodiments may include a capacitor configuration that may allow integration of capacitors of different voltage ratings. For example, a first row of capacitors may address a two-level functionality that may include high voltage rating capacitors, and a second row of capacitors may address a three-level functionality and may include capacitors having a different voltage rating from the first row.

In one or more embodiments, capacitors in a first row may be arranged in an order (e.g., +/-; +/-; +/-) covering a two-level functionality and capacitors in a second row may be arranged to have different configurations based on manufacturing constraints and current path constraints, but embodiments are not limited thereto. For example, one or more embodiments may include a single row of capacitors configuration configured to cover a same functionality as a two row of capacitors configuration. The configuration for a three-level inverter disclosed above is not limited to embodiments disclosed herein. For example, the configuration for a three-level inverter disclosed above may be applied to an N-level inverter. For example, one or more embodiments may include a hybrid capacitor configuration, including several different current paths as disclosed herein.

One or more embodiments may include a solution for a two-level and/or a three-level multi-level inverter (MLI) DC link capacitor (or DC bulk capacitor). One or more embodiments may provide a DC link capacitor (or DC bulk capacitor) that can be manufactured using same (or similar) processes used to manufacture some two-level capacitors, which may be beneficial for manufacturing purposes. One or more embodiments include a DC link capacitor (or DC bulk capacitor) that may be flexible and scalable for different voltage levels, capacitance values, and/or number of inverter levels.

One or more embodiments may provide a DC link capacitor (or DC bulk capacitor) that may be combined with a power switch, which may result in a relatively low parasitic inductance, which may enable higher (or relatively higher) switching speeds in a complete commutation loop. One or more embodiments may use a small (or relatively small) space to combine two-level functionality and/or a three-level functionality in a single DC bulk capacitor, which may reduce parasitic inductances and enable electromagnetic compatibility (EMC) compliance with minimal (or reduced) efforts.

One or more embodiments may include a two-level and/or a three-level capacitor functionality in a single bulk capacitor assembly. One or more embodiments may include capacitors arrangement for obtaining a two-level functionality and/or a three-level functionality, while considering (or including) a shorter current path, as well as potential mechanical constraints provided by manufacturers. One or more embodiments may include a planar busbar arrangement for a multi-level inverter with connections of bulk capacitor capacitors.

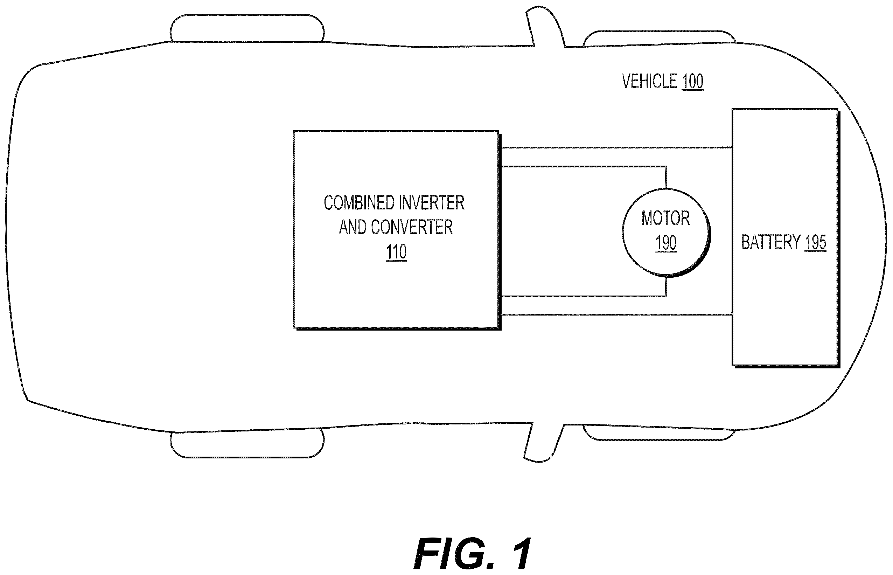

FIG. 1 depicts an exemplary system infrastructure for a vehicle including a combined inverter and converter, according to one or more embodiments. Alternatively, the inverter may be an inverter without a converter. In the context of this disclosure, the inverter without a converter, or the combined inverter and converter, may be referred to as an inverter. As shown in FIG. 1, electric vehicle 100 may include an inverter 110, a motor 190, and a battery 195. The inverter 110 may include components to receive electrical power from an external source and output electrical power to charge the battery 195 of electric vehicle 100. The inverter 110 may convert DC power from the battery 195 in electric vehicle 100 to AC power, to drive (e.g. rotate) the motor 190 of the electric vehicle 100, for example, but the embodiments are not limited thereto. The inverter 110 may be bidirectional, and may convert DC power to AC power, or convert AC power to DC power, such as during regenerative braking, for example. The inverter 110 may be a three-phase inverter, a single-phase inverter, or a multi-phase inverter.

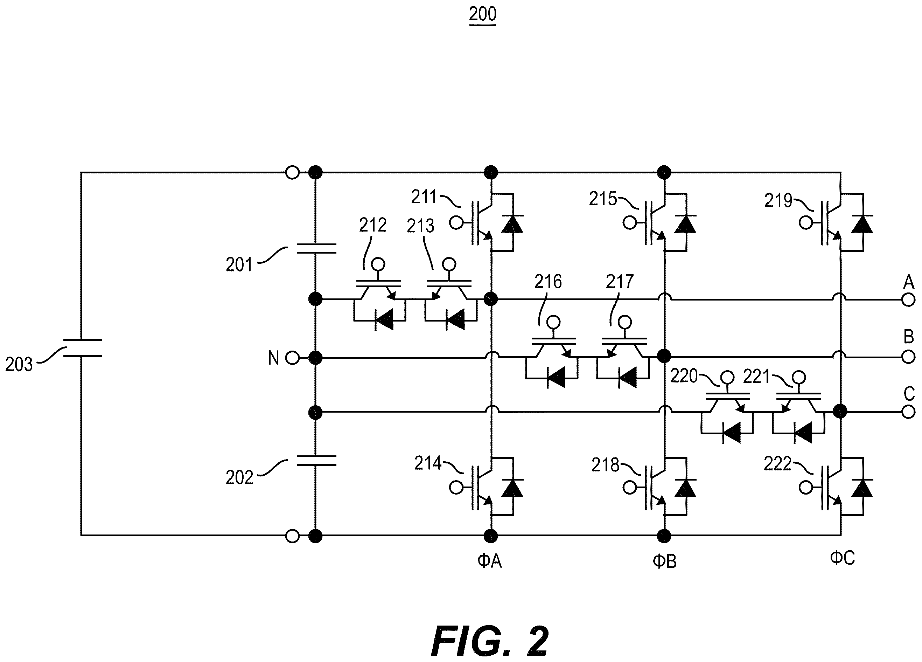

FIG. 2 depicts an electrical power schematic of a three phase inverter module, according to one or more embodiments. Electrical power schematic 200 may correspond to an internal configuration of the inverter 110. The electrical power schematic 200 may include a first capacitor 201, a second capacitor 202, a third capacitor 203, switch 211, switch 212, switch 213, switch 214, switch 215, switch 216, switch 217, switch 218, switch 219, switch 220, switch 221, and switch 222. Although not depicted in FIG. 2, the inverter 110 may be connected to the battery 195 and the motor 190. Battery 195 may be any power supply, and motor 190 may be any load. A first phase A may correlate with ΦA including switch 211, switch 212, switch 213, switch 214, and neutral power terminal N, a second phase B may correlate with ΦB including switch 215, switch 216, switch 217, switch 218, and neutral power terminal N, and a third phase C may correlate with ΦC including switch 219, switch 220, switch 221, switch 222, and neutral power terminal N. Switches 211-222 may be metal-oxide-semiconductor field-effect transistors (MOSFET), insulated-gate bipolar transistors (IGBTs), silicon carbide (SiC) transistors, and/or gallium nitride (GaN) transistors, for example, but embodiments are not limited thereto. Switches 211-222 may each include multiple dies, but embodiments are not limited thereto. Although switches are depicted as one switch in FIG. 2, each switch may be one or more switches.

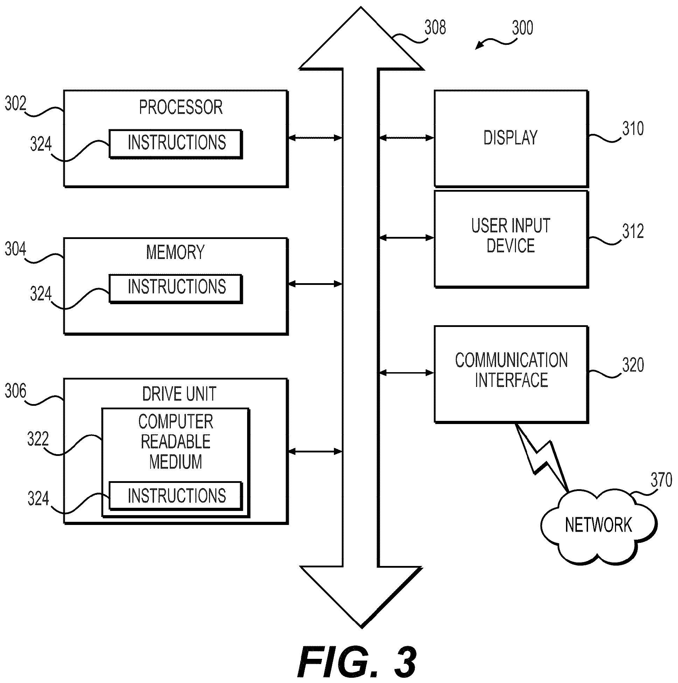

Switches 211-222 may be driven by a PWM signal generated by inverter controller 300 (shown in FIG. 3) to convert DC power delivered via an output terminal set (not depicted in FIG. 2) to three phase AC power at outputs A, B, and C via output a terminal set (not depicted in FIG. 2) to the motor 190. Additionally, although FIGS. 1 and 2 illustrate a three-phase inverter, the disclosure is not limited thereto, and may include single phase or multi-phase inverters.

FIG. 3 depicts an exemplary system infrastructure for an inverter controller, according to one or more embodiments. The inverter controller 300 may include a set of instructions that can be executed to cause the inverter controller 300 to perform any one or more of the methods or computer based functions disclosed herein. The inverter controller 300 may operate as a standalone device or may be connected, e.g., using a network, to other computer systems or peripheral devices.

In a networked deployment, the inverter controller 300 may operate in the capacity of a server or as a client in a server-client user network environment, or as a peer computer system in a peer-to-peer (or distributed) network environment. The inverter controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the inverter controller 300 can be implemented using electronic devices that provide voice, video, or data communication. Further, while the inverter controller 300 is illustrated as a single system, the term "system" shall also be taken to include any collection of systems or sub-systems that individually or jointly execute a set, or multiple sets, of instructions to perform one or more computer functions.

As depicted in FIG. 3, the inverter controller 300 may include a processor 302, e.g., a central processing unit (CPU), a graphics processing unit (GPU), or both. The processor 302 may be a component in a variety of systems. For example, the processor 302 may be part of a standard inverter. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The inverter controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing and the like.

As depicted, the inverter controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the inverter controller 300 may include an output device 312 configured to allow a user to interact with any of the components of the inverter controller 300. The output device 312 may be a number pad, a keyboard, or a cursor control device, such as a mouse, or a joystick, touch screen display, remote control, or any other device operative to interact with the inverter controller 300.

The inverter controller 300 may also or alternatively include drive unit 306 implemented as a disk or optical drive. The drive unit 306 may include a computer-readable medium 322 in which instructions 324 (e.g., one or more sets of instructions), e.g. software, can be embedded. Further, the instructions 324 may embody one or more of the methods or logic as described herein. The instructions 324 may reside completely or partially within the memory 304 and/or within the processor 302 during execution by the inverter controller 300. The memory 304 and the processor 302 also may include computer-readable media as discussed above.

In some systems, the computer-readable medium 322 includes the instructions 324 or receives and executes the instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in inverter controller 300, or combinations thereof. The connection with the network 370 may be a physical connection, such as a wired Ethernet connection or may be established wirelessly as discussed below. Likewise, the additional connections with other components of the inverter controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The inverter controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

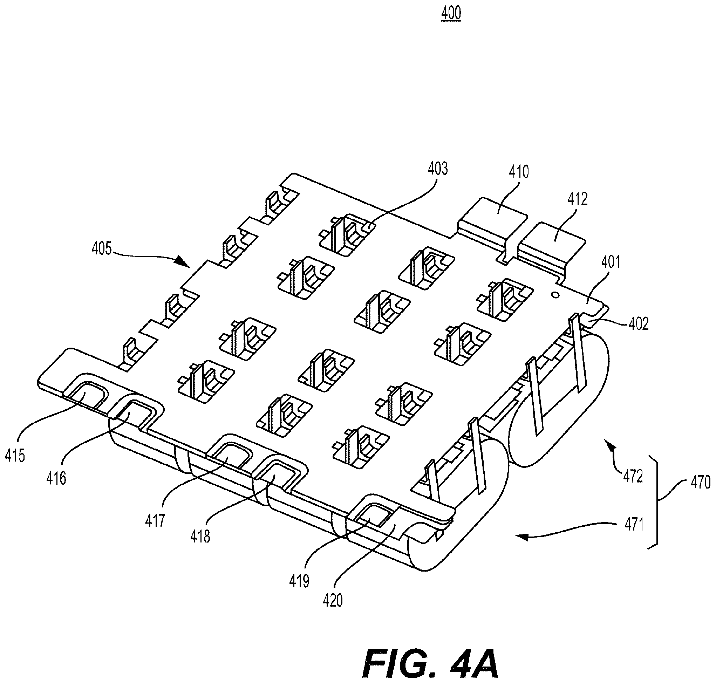

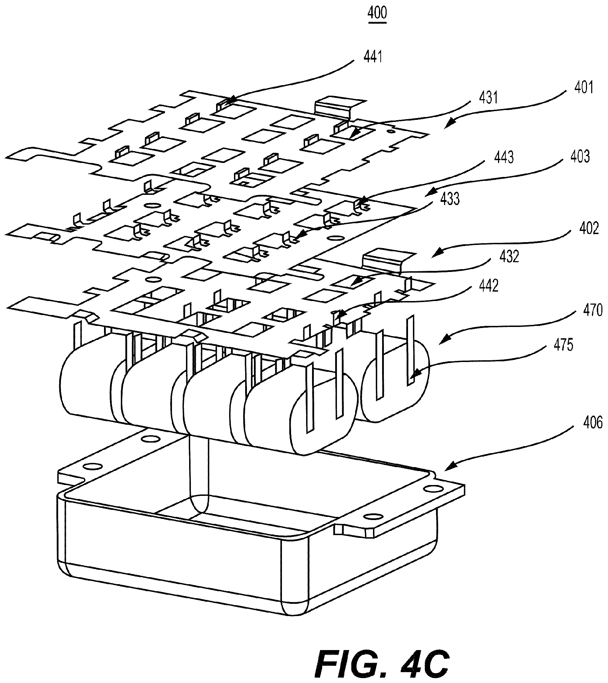

FIG. 4A depicts an isometric view of a capacitor assembly, according to one or more embodiments. Capacitor assembly 400 may include a busbar assembly 405, including a positive DC power busbar 401, a negative DC power busbar 402, and a neutral power busbar 403 (depicted in more detail in FIG. 4C), and a plurality of bobbins 470, including a first row of bobbins 471 and a second row of bobbins 472. In the context of this disclosure, the term bobbin may refer to an entirety of a capacitor or a portion (e.g., wound electrode and dielectric) of a capacitor, but embodiments are not limited thereto. The positive DC power busbar 401 may include a positive input terminal 410, which may be connected to the battery 195 (not depicted in FIG. 4A). The negative DC power busbar 402 may include negative input terminal 412, which may be connected to the battery 195 (not depicted in FIG. 4A). The embodiment depicted in FIG. 4A may allow a planar arrangement of the busbar assembly 405, which may allow for an integrated two-level and/or three-level functionality and a reduction of parasitic inductance in the capacitor assembly 400. For example, the first row of bobbins 471 may include a first group of bobbins configured to enable a two-level functionality (or operation) of the inverter 110 and the second row of bobbins 472 may include a second group of bobbins configured to enable a three-level functionality (or operation) of the inverter 110, but embodiments are not limited thereto.

The positive DC power busbar 401 may further include terminals to connect to power modules. The negative DC power busbar 402 may include terminals 416, 418, and 420, which may be configured to connect to power modules (not depicted in FIG. 4A). The neutral power busbar 403 may include terminals 415, 417, and 419, which may be configured to connect to power modules (not depicted in FIG. 4A). For example, one or more power modules (not depicted in FIG. 4A) may each include one or more tabs connected to the positive DC power busbar 401, the negative DC power busbar 402, and the neutral power busbar 403. The positive DC power busbar 401, the negative DC power busbar 402, and the neutral power busbar 403 may be configured to connect one or more of the plurality of bobbins 470 to one or more power modules (not depicted in FIG. 4A).

As depicted in FIG. 4A, the positive DC power busbar 401, the negative DC power busbar 402, and the neutral power busbar 403 may each include one or more openings (e.g., see FIG. 4C). For example, the positive DC power busbar 401 may include one or more first openings 431, the negative DC power busbar 402 may include one or more second openings 432, and the neutral power busbar 403 may include one or more third openings 433, but embodiments are not limited thereto. Each bobbin in the plurality of bobbins 470 may include a bobbin 475 (e.g., see FIG. 4C) configured to extend through one or more of the openings in the positive DC power busbar 401, the negative DC power busbar 402, and/or the neutral power busbar 403, but embodiments are not limited thereto.

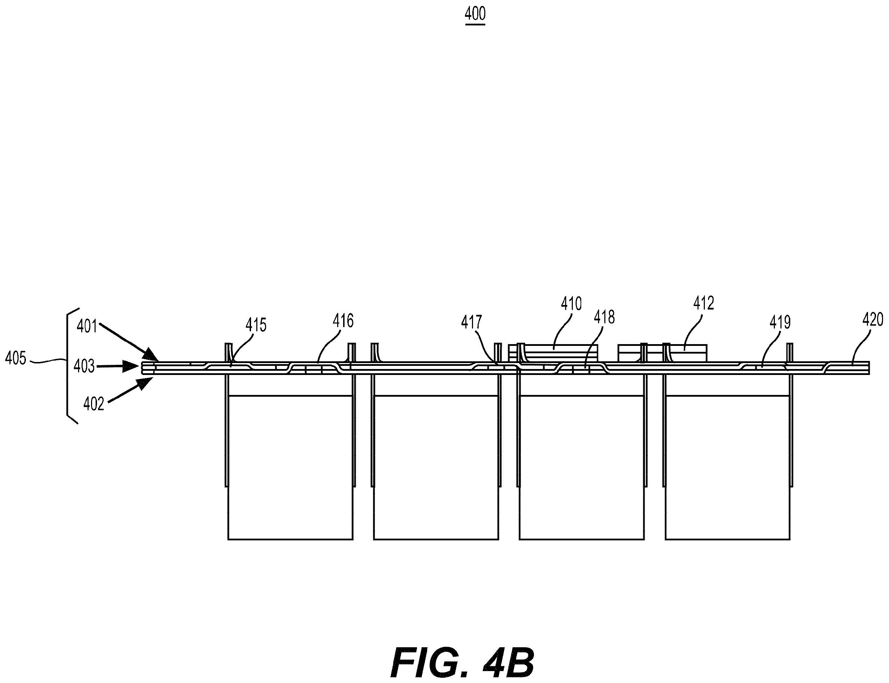

FIG. 4B depicts a side view of the capacitor assembly of FIG. 4A, according to one or more embodiments. Capacitor assembly 400 may include the plurality of bobbins 470 arranged in the first row of bobbins 471 and the second row of bobbins 472, but embodiments are not limited thereto. For example, the plurality of bobbins 470 may include two or more bobbins arranged in one or more rows. The busbar assembly 405 may be arranged to have the neutral power busbar 403 between the positive DC power busbar 401 and the negative DC power busbar 402. For example, the positive DC power busbar 401 may be arranged on top of the neutral power busbar 403, and the negative DC power busbar 402 may be arranged below the neutral power busbar 403, but embodiments are not limited thereto and the busbar assembly 405 may be arranged in a different order. The busbar assembly 405 may be covered by a dielectric layer (not depicted in FIG. 4B), such that individual busbars in the busbar assembly 405 are electrically insulated from each other when arranged in a stack of planar busbars (as depicted in FIG. 4B).

The busbar assembly 405 may be arranged to allow the plurality of bobbins 470 to connect the positive DC power busbar 401, the negative DC power busbar 402, and the neutral power busbar 403 to facilitate a two-level and/or a three level functionality configuration, but embodiments are not limited thereto. The plurality of bobbins 470 may be arranged to provide a full three-level functionality; however the plurality of bobbins 470 may each have different configurations based on manufacturing constraints and/or current paths. The first row of bobbins 471 may be configured to address a two-level functionality and may include high voltage rated capacitors (and/or bobbins), and the second row of bobbins 472 may be configured to address a three-level functionality and may include different voltage rated capacitors (and/or bobbins). For example, bobbins in the first row of bobbins 471 may be arranged (e.g., +/-, +/-, etc.) to provide a two-level functionality, and bobbins in the second row of bobbins 472 may include different configurations based on manufacturing constraints and/or current paths.

FIG. 4C depicts an exploded view of the capacitor assembly of FIG. 4A, according to one or more embodiments. Capacitor assembly 400 may include a case 406 (or housing) having an interior surface where the positive DC power busbar 401, the negative DC power busbar 402, and the neutral power busbar 403 are arranged in a stack of planar busbars. As depicted in FIG. 4C, the positive DC power busbar may be arranged on (or on top) of the neutral power busbar 403, the neutral power busbar 403 may be arranged below (or underneath) the positive DC power busbar 401 and on (or on top) the negative DC power busbar 402, and the negative DC power busbar 402 may be arranged below (or underneath) the neutral power busbar 403 and on (or on top) of the plurality of bobbins 470, but embodiments are not limited thereto and the order in which busbars and/or the capacitors (and/or bobbins) are arranged may be different. The plurality of bobbins 470 may each include a bobbin 475 with a longitudinal axis in the one or more capacitors (and/or bobbins) that may be in parallel with a longitudinal axis of each of the positive DC power busbar 401, the negative DC power busbar 402, and neutral power busbar 403, but embodiments are not limited thereto.

The positive DC power busbar 401 may include one or more capacitor connectors 441 to connect to one or more of the plurality of bobbins 470, the negative DC power busbar 402 may include one or more capacitor connectors 442 to connect to one or more of the plurality of bobbins 470, and/or the neutral power busbar 403 may include one or more capacitor connectors 443 to connect to one or more of the plurality of bobbins 470. The one or more capacitor connectors 442 may extend through the one or more first openings 431 and the one or more second openings 432. The one or more capacitor connectors 443 may extend through the one or more first openings 431.

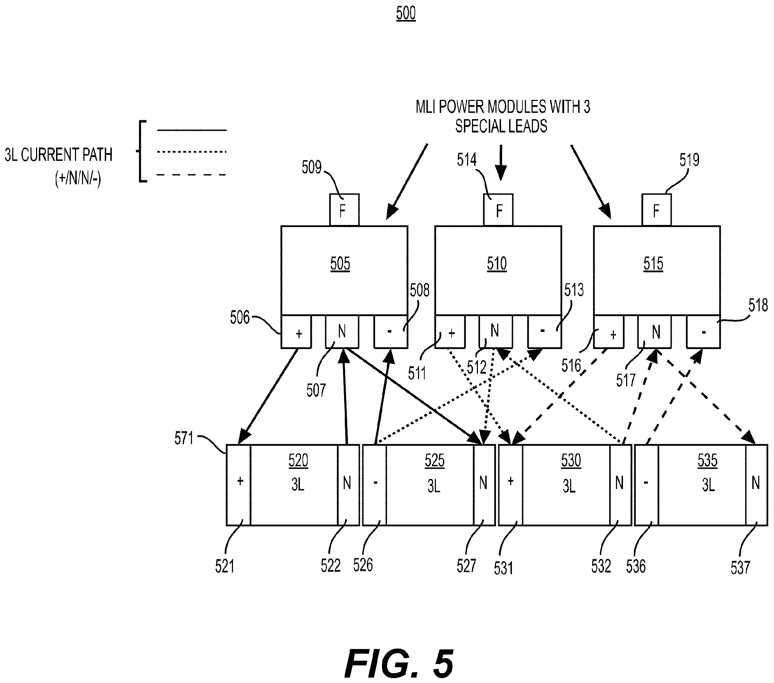

FIG. 5 depicts a full three-level capacitor assembly including one row of bobbins, according to one or more embodiments. Capacitor assembly 500 may correspond to an internal configuration of inverter 110. Capacitor assembly 500 may include a first row of bobbins 571, a first power module 505, a second power module 510, and a third power module 515. The first row of bobbins 571 may include a first bobbin 520, a second bobbin 525, a third bobbin 530, and a fourth bobbin 535. The first bobbin 520 may include a positive tab 521 and a neutral tab 522. The second bobbin 525 may include a negative tab 526 and a neutral tab 527. The third bobbin 530 may include a positive tab 531 and a neutral tab 532. The fourth bobbin 535 may include a negative tab 536 and a neutral tab 537. The first power module 505 may include a first positive tab 506, a first neutral tab 507, a first negative tab 508, and a first output tab 509. The second power module 510 may include a second positive tab 511, a second neutral tab 512, a second negative tab 513, and a second output tab 514. The third power module 515 may include a third positive tab 516, a third neutral tab 517, a third negative tab 518, and a third output tab 519.

The first bobbin 520, the second bobbin 525, the third bobbin 530, and the fourth bobbin 535 may each be configured to provide a three-level functionality, but embodiments are not limited thereto. The first power module 505, the second power module 510, and the third power module 515 may be generic multi-level inverter (MLI) power modules with three special leads (or tabs), but embodiments are not limited thereto.

As depicted in FIG. 5, the capacitor assembly 500 may be configured to have different current paths between tabs in the first power module 505, the second power module 510, and the third power module 515, and tabs in a group of bobbins in the first row of bobbins 571. The different current paths may flow through one or more of the positive DC power busbar 401, the negative DC power busbar 402, and/or the neutral power busbar 403. For example, a current may flow from the first positive tab 506 to the positive tab 521, a current may flow from the neutral tab 522 to the first neutral tab 507, a current may flow from the first neutral tab 507 to the neutral tab 527, a current may flow from the negative tab 526 to the first negative tab 508, a current may flow from the negative tab 526 to the second negative tab 513, a current may flow from the second positive tab 511 to the positive tab 531, a current may flow from the second neutral tab 512 to the neutral tab 527, a current may flow from the neutral tab 532 to the second neutral tab 512, a current may flow from the third positive tab 516 to the positive tab 531, a current may flow from the neutral tab 532 to the third neutral tab 517, a current may flow from the third neutral tab 517 to the neutral tab 537, and a current may flow from the negative tab 536 to the third negative tab 518, but embodiments are not limited thereto and the capacitor assembly 500 may be configured to have current paths between power modules and capacitors (and/or bobbins) flowing in different paths.

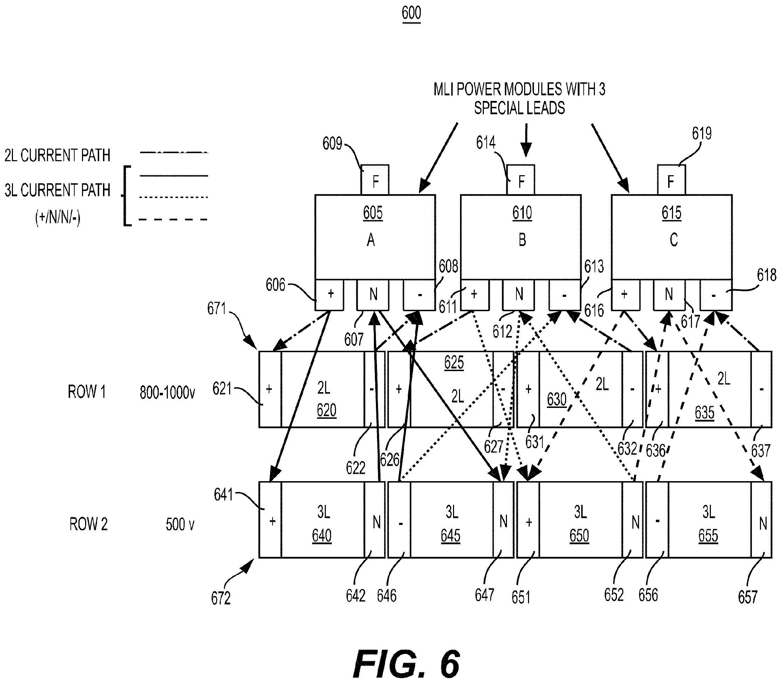

FIG. 6 depicts a hybrid capacitor assembly with a +/N/- bobbin terminal configuration for a three-level functionality in a second row, according to one or more embodiments. Hybrid capacitor assembly 600 may correspond to an internal configuration of inverter 110. Hybrid capacitor assembly 600 may include a first row of bobbins 671, a second row of bobbins 672, a first power module 605, a second power module 610, and a third power module 615. The first row of bobbins 671 may include a first bobbin 620, a second bobbin 625, a third bobbin 630, and a fourth bobbin 635. The second row of bobbins 672 may include a fifth bobbin 640, a sixth bobbin 645, a seventh bobbin 650, and an eighth bobbin 655. The first bobbin 620 may include a positive tab 621 and a negative tab 622. The second bobbin 625 may include a positive tab 626 and a negative tab 627. The third bobbin 630 may include a positive tab 631 and a negative tab 632. The fourth bobbin may include a positive tab 636 and a negative tab 637. The fifth bobbin 640 may include a positive tab 641 and a neutral tab 642. The sixth bobbin 645 may include a negative tab 646 and a neutral tab 647. The seventh bobbin 650 may include a positive tab 651 and a neutral tab 652. The eighth bobbin 655 may include a negative tab 656 and a neutral tab 657. The first power module 605 may include a first positive tab 606, a first neutral tab 607, a first negative tab 608, and a first output tab 609. The second power module 610 may include a second positive tab 611, a second neutral tab 612, a second negative tab 613, and a second output tab 614. The third power module 615 may include a third positive tab 616, a third neutral tab 617, a third negative tab 618, and a third output tab 619.

The first bobbin 620, the second bobbin 625, the third bobbin 630, and the fourth bobbin 635 may be a first group of capacitors (and/or bobbins) configured to provide a two-level functionality and have a voltage rating of approximately 800V-1000V, but embodiments are not limited thereto. The fifth bobbin 640, the sixth bobbin 645, the seventh bobbin 650, and the eighth bobbin 655 may be a second group of capacitors (and/or bobbins) configured to provide a three-level functionality and have a voltage rating of approximately 500V, but embodiments are not limited thereto. As depicted in FIG. 6, the first row of bobbin 671 may be closer to the first power module 605, the second power module 610, and the third power module 615 than the second row of bobbin 672, such that a current flowing between the first power module 605, the second power module 610, and/or the third power module 615 and one or more bobbins in the first row of bobbin 671 is shorter than a current flowing between the first power module 605, the second power module 610, and/or the third power module 615 and one or more bobbin in the second row of bobbin 672.

As depicted in FIG. 6, bobbins in the first row of bobbins 671 may be arranged such that positive tabs (or a positive connection) and negative tabs (or a negative connection) of different respective bobbins in the first row of bobbins 671, face each other, but embodiments are not limited thereto. As also depicted in FIG. 6, bobbins in the second row of bobbins 672 may be arranged such that positive and/or negative tabs of different respective bobbins in the second row of bobbins 672, face neutral tabs (or a neutral connection) of other bobbins in the second row of bobbins 772, but embodiments are not limited thereto. The first power module 605, the second power module 610, and the third power module 615 may be generic multi-level inverter (MLI) power modules with three special leads (or tabs), but embodiments are not limited thereto.

As depicted in FIG. 6, the hybrid capacitor assembly 600 may be configured to have different current paths flowing between tabs in the first power module 605, the second power module 610, and the third power module 615, and tabs in a group of bobbins in the first row of bobbins 671 and a group of bobbins in the second row of bobbins 672. The different current paths may flow through one or more of the positive DC power busbar 401, the negative DC power busbar 402, and/or the neutral power busbar 403. The flow of current between power modules and capacitors (and/or bobbins) may depend of a two-level or three-level configuration functionality of the hybrid capacitor assembly 600.

For example, in a three-level functionality, a current may flow from the first positive tab 606 to the positive tab 641, a current may flow from the neutral tab 642 to the first neutral tab 607, a current may flow from the first neutral tab 607 to the neutral tab 647, a current may flow from the negative tab 646 to the first negative tab 608, a current may flow from the negative tab 646 to the second negative tab 613, a current may flow from the second positive tab 611 to the positive tab 651, a current may flow from the second neutral tab 612 to the neutral tab 647, a current may flow from the neutral tab 652 to the second neutral tab 612, a current may flow from the third positive tab 616 to the positive tab 651, a current may flow from the neutral tab 652 to the third neutral tab 617, a current may flow from the neutral tab 652 to the third neutral tab 617, and a current may flow from the negative tab 656 to the third negative tab 618, but embodiments are not limited thereto and the hybrid capacitor assembly 600 may be configured to have current paths between power modules and capacitors (and/or bobbins) flowing in different paths.

For example, in a two-level functionality, a current may flow from the first positive tab 606 to the positive tab 621, a current may flow from the negative tab 622 to the first negative tab 608, a current may flow from the second positive tab 611 to the positive tab 626, a current may flow from the negative tab 632 to the second negative tab 613, a current may flow from the third positive tab 616 to the positive tab 636, and a current may flow from the negative tab 637 to the third negative tab 618, but embodiments are not limited thereto and the hybrid capacitor assembly 600 may be configured to have current paths between power modules and capacitors (and/or bobbins) flowing in different paths.

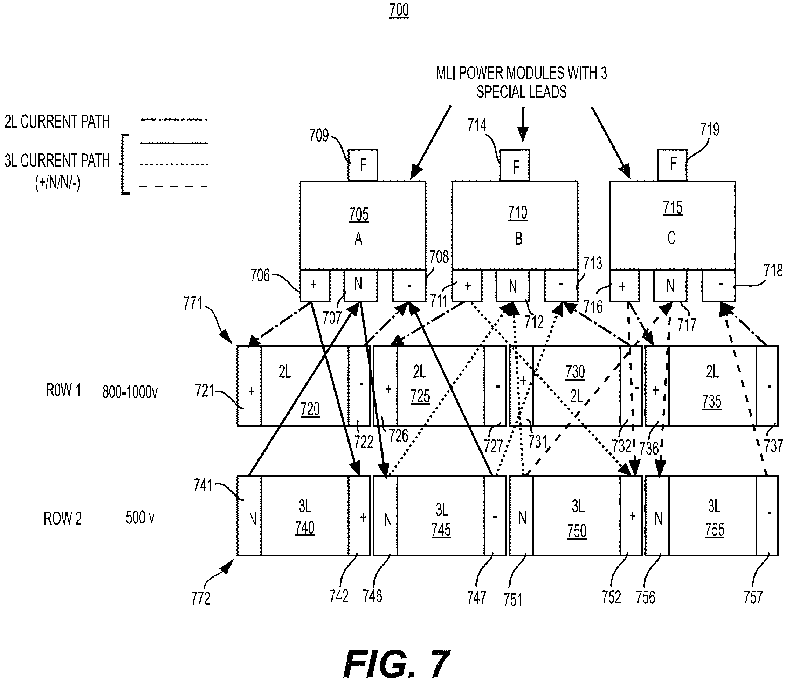

FIG. 7 depicts a hybrid capacitor assembly with an N/+/N/- bobbin terminal configuration for a three-level functionality in a second row, according to one or more embodiments. Hybrid capacitor assembly 700 may correspond to an internal configuration of inverter 110. Hybrid capacitor assembly 700 may include a first row of bobbins 771, a second row of bobbins 772, a first power module 705, a second power module 710, and a third power module 715. The first row of bobbins 771 may include a first bobbin 720, a second bobbin 725, a third bobbin 730, and a fourth bobbin 735. The second row of bobbins 772 may include a fifth bobbin 740, a sixth bobbin 745, a seventh bobbin 750, and an eighth bobbin 755. The first bobbin 720 may include a positive tab 721 and a negative tab 722. The second bobbin 725 may include a positive tab 726 and a negative tab 727. The third bobbin 730 may include a positive tab 731 and a negative tab 732. The fourth bobbin 735 may include a positive tab 736 and a negative tab 737. The fifth bobbin 740 may include a neutral tab 741 and a positive tab 742. The sixth bobbin 745 may include a neutral tab 746 and a negative tab 747. The seventh bobbin 750 may include a neutral tab 751 and a positive tab 752. The eighth bobbin 755 may include a neutral tab 756 and a negative tab 757. The first power module 705 may include a first positive tab 706, a first neutral tab 707, a first negative tab 708, and a first output tab 709. The second power module 710 may include a second positive tab 711, a second neutral tab 712, a second negative tab 713, and a second output tab 714. The third power module 715 may include a third positive tab 716, a third neutral tab 717, a third negative tab 718, and a third output tab 719.

The first bobbin 720, the second bobbin 725, the third bobbin 730, and the fourth bobbin 735 may be a first group of capacitors (and/or bobbins) configured to provide a two-level functionality and have a voltage rating of approximately 800V-1000V, but embodiments are not limited thereto. The fifth bobbin 740, the sixth bobbin 745, the seventh bobbin 750, and the eighth bobbin 755 may be a second group of capacitors (and/or bobbins) configured to provide a three-level functionality and have a voltage rating of approximately 500V, but embodiments are not limited thereto. As depicted in FIG. 7, the first row of bobbins 771 may closer to the first power module 705, the second power module 710, and third power module 715 than the second row of bobbins 772, such that a current flowing between the first power module 705, the second power module 710, and/or the third power module 715 and one or more bobbins in the first row of bobbins 771 is shorter than a current flowing between the first power module 705, the second power module 710, and/or the third power module 715 and one or more bobbins in the second row of bobbin 772.

As depicted in FIG. 7, bobbins in the first row of bobbins 771 may be arranged such that positive tabs (or a positive connection) and negative tabs (or a negative connection) of different respective bobbins in the first row of bobbins 771, face each other, but embodiments are not limited thereto. As also depicted in FIG. 7, bobbins in the second row of bobbins 772 may be arranged such that positive and/or negative tabs of different respective bobbins in the second row of bobbins 772, face neutral tabs (or a neutral connection) of other bobbins in the second row of bobbins 772, but embodiments are not limited thereto. The hybrid capacitor assembly 700 maybe similar to the hybrid capacitor assembly 600, except that polarity of tabs in bobbins in the second row of bobbins 772 may be inversed with respect to bobbins in the second row of bobbins 672 in FIG. 6. The first power module 705, the second power module 710, and the third power module 715 may be generic multi-level inverter (MLI) power modules with three special leads (or tabs), but embodiments are not limited thereto.

As depicted in FIG. 7, the hybrid capacitor assembly 700 may be configured to have different current paths flowing between tabs in the first power module 705, the second power module 710, and the third power module 715, and tabs in a group of bobbins in the first row of bobbins 771 and a group of bobbins in the second row of bobbins 772. The different current paths may flow through one or more of the positive DC power busbar 401, the negative DC power busbar 402, and/or the neutral power busbar 403. The flow of current between power modules and capacitors (and/or bobbins) may depend of a two-level or three-level configuration functionality of the hybrid capacitor assembly 700.

For example, in a three-level functionality, a current may flow from the first positive tab 706 to the positive tab 742, a current may flow from the neutral tab 741 to the first neutral tab 707, a current may flow from the first neutral tab 707 to the neutral tab 746, a current may flow from the negative tab 747 to the first negative tab 708, a current may flow from the negative tab 747 to the second negative tab 713, a current may flow from the second positive tab 711 to the positive tab 752, a current may flow from the second neutral tab 712 to the neutral tab 746, a current may flow from the negative tab 747 to the second negative tab 713, a current may flow from the neutral tab 751 to the second neutral tab 712, a current may flow from the third positive tab 716 to the positive tab 752, a current may flow from the neutral tab 751 to the third neutral tab 717, a current may flow from the third neutral tab 717 to the neutral tab 756, and a current may flow from the negative tab 757 to the third negative tab 718, but embodiments are not limited thereto and the hybrid capacitor assembly 700 may be configured to have current paths between power modules and capacitors (and/or bobbins) flowing in different paths.

For example, in a two-level functionality, a current may flow from the first positive tab 706 to the positive tab 721, a current may flow from the negative tab 722 to the first negative tab 708, a current may flow from the second positive tab 711 to the positive tab 726, a current may flow from the negative tab 732 to the second negative tab 713, a current may flow from the third positive tab 716 to the positive tab 736, and a current may flow from the negative tab 737 to the third negative tab 718, but embodiments are not limited thereto and the hybrid capacitor assembly 700 may be configured to have current paths between power modules and capacitors (and/or bobbins) flowing in different paths.

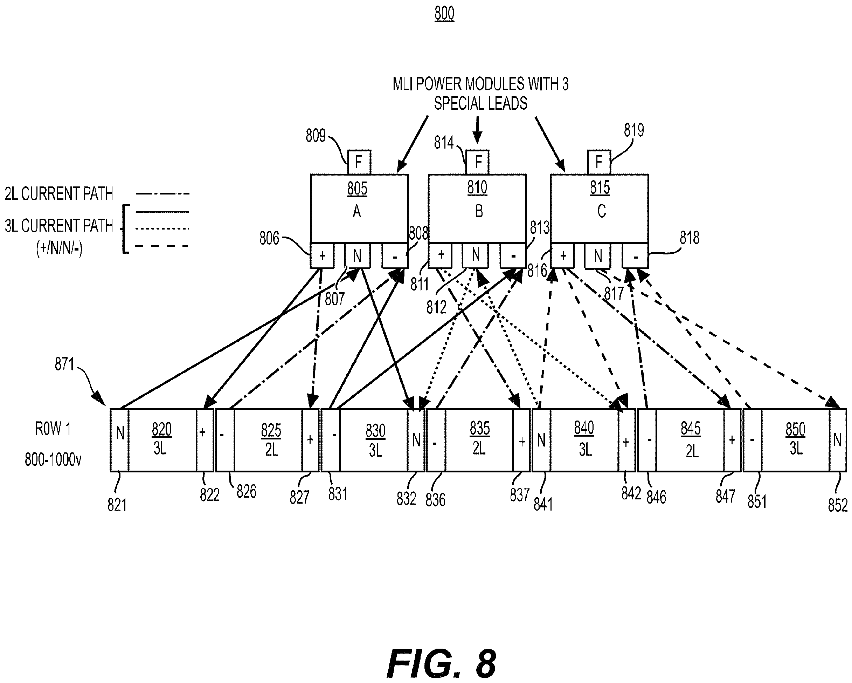

FIG. 8 depicts a hybrid capacitor assembly with a single row configuration and a three bobbin per phase configuration, according to one or more embodiments. Hybrid capacitor assembly 800 may correspond to an internal configuration of inverter 110. Hybrid capacitor assembly 800 may include a first row of bobbins 871, a first power module 805, a second power module 810, and a third power module 815. The first row of bobbins 871 may include a first bobbin 820, a second bobbin 825, a third bobbin 830, a fourth bobbin 835, a fifth bobbin 840, a sixth bobbin 845, and a seventh bobbin 850. The first bobbin 820 may include a neutral tab 821 and a positive tab 822. The second bobbin 825 may include a negative tab 826 and a positive tab 827. The third bobbin 830 may include a negative tab 831 and a neutral tab 832. The fourth bobbin 835 may include a negative tab 836 and a positive tab 837. The fifth bobbin 840 may include a neutral tab 841 and a positive tab 842. The sixth bobbin 845 may include a negative tab 846 and a positive tab 847. The seventh bobbin 850 may include a negative tab 851 and a neutral tab 852. The first power module 805 may include a first positive tab 806, a first neutral tab 807, a first negative tab 808, and a first output tab 809. The second power module 810 may include a second positive tab 811, a second neutral tab 812, a second negative tab 813, and a second output tab 814. The third power module 815 may include a third positive tab 816, a third neutral tab 817, a third negative tab 818, and a third output tab 819.

The second bobbin 825, the fourth bobbin835, and the sixth bobbin 845 may be a first group of capacitors (and/or bobbins) configured to provide a two-level functionality and have a voltage rating of approximately 800V-1000V, but embodiments are not limited thereto. The first bobbin 820, the third bobbin 830, the fifth bobbin 840, and the seventh bobbin 850 may be a second group of capacitors (and/or bobbins) configured to provide a three-level functionality and have a voltage rating of approximately 800V-1000V, but embodiments are not limited thereto. For example, the first group of bobbins, including the second bobbin 825, the fourth bobbin 835, and the sixth bobbin 845, and the second group of bobbins, including the first bobbin 820, the third bobbin 830, the fifth bobbin 840, and the seventh bobbin 850 may be alternately arranged in a single row (e.g., the first row of bobbins 871), but embodiments are not limited thereto. The first power module 805, the second power module 810, and the third power module 815 may be generic multi-level inverter (MLI) power modules with three special leads (or tabs), but embodiments are not limited thereto.

As depicted in FIG. 8, the hybrid capacitor assembly 800 may be configured to have different current paths flowing between tabs in the first power module 805, the second power module 810, and the third power module 815, and tabs in a group of bobbins in the first row of bobbins 871. The different current paths may flow through one or more of the positive DC power busbar 401, the negative DC power busbar 402, and/or the neutral power busbar 403. The flow of current between power modules and capacitors (and/or bobbins) may depend of a two-level or three-level configuration functionality of the hybrid capacitor assembly 800.

For example, in a three-level functionality, a current may flow from first positive tab 806 to the positive tab 822, a current may flow from the neutral tab 821 to the first neutral tab 807, a current may flow from the first neutral tab 807 to the neutral tab 832, a current may flow from the negative tab 831 to the first negative tab 808, a current may flow from the negative tab 831 to the second negative tab 813, a current may flow from the second positive tab 811 to the positive tab 842, a current may flow from the second neutral tab 812 to the neutral tab 832, a current may flow from the neutral tab 841 to the second neutral tab 812, a current may flow from the neutral tab 841 to the third positive tab 816, a current may flow from the third positive tab 816 to the positive tab 842, a current may flow from the third neutral tab 817 to the neutral tab 852, and a current may flow from the negative tab 851 to the third negative tab 818, but embodiments are not limited thereto and the hybrid capacitor assembly 800 may be configured to have current paths between power modules and capacitors (and/or bobbins) flowing in different paths.

For example, in a two-level functionality, a current may flow from the first positive tab 806 to the positive tab 827, a current may flow from the negative tab 826 to the first negative tab 808, a current may flow from the second positive tab 811 to the positive tab 837, a current may flow from the negative tab 836 to the second negative tab 813, a current may flow from the third positive tab 816 to the positive tab 847, and a current may flow from the negative tab 846 to the third negative tab 818, but embodiments are not limited thereto and the hybrid capacitor assembly 800 may be configured to have current paths between power modules and capacitors (and/or bobbins) flowing in different paths.

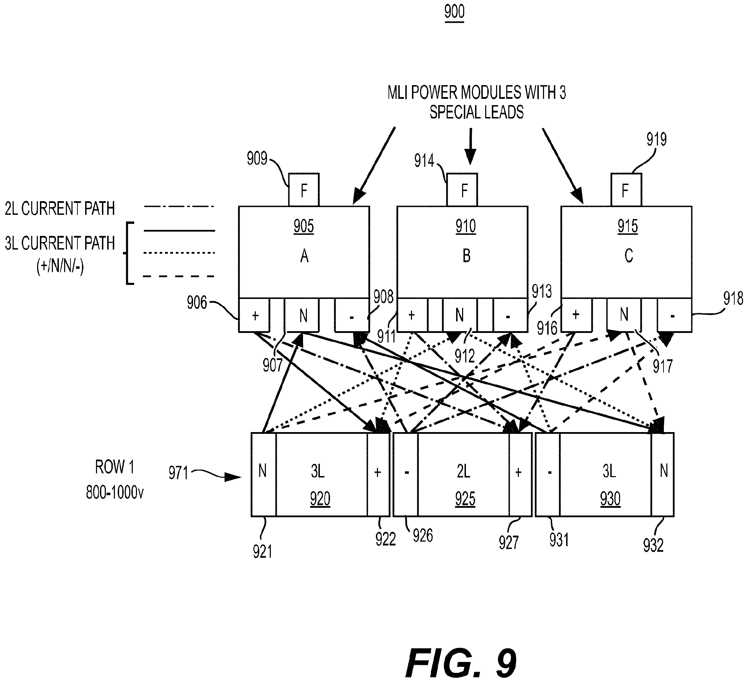

FIG. 9 depicts a hybrid capacitor assembly with a three bobbin configuration for all phases, according to one or more embodiments. Hybrid capacitor assembly 900 may correspond to an internal configuration of inverter 110. Hybrid capacitor assembly 900 may include a first row of bobbins 971, a first power module 905, a second power module 910, and a third power module 915. The first row of bobbins 971 may include a first bobbin 920, a second bobbin 925, and a third bobbin 930. The first bobbin 920 may include a neutral tab 921 and a positive tab 922. The second bobbin 925 may include a negative tab 926 and a positive tab 927. The third bobbin 930 may include a negative tab 931 and a neutral tab 932. The first power module 905 may include a first positive tab 906, a first neutral tab 907, a first negative tab 908, and a first output tab 909. The second power module 910 may include a second positive tab 911, a second neutral tab 912, a second negative tab 913, and a second output tab 914. The third power module 915 may include a third positive tab 916, a third neutral tab 917, a third negative tab 918, and a third output tab 919.

The second bobbin 925 may be configured to provide a two-level functionality and have a voltage rating of approximately 800V-1000V, but embodiments are not limited thereto. The first bobbin 920 and the third bobbin 830 may each be configured to provide a three-level functionality and have a voltage rating of approximately 800V-1000V, but embodiments are not limited thereto. The first power module 905, the second power module 910, and the third power module 915 may be generic multi-level inverter (MLI) power modules with three special leads (or tabs), but embodiments are not limited thereto.

As depicted in FIG. 9, the hybrid capacitor assembly 900 may be configured to have different current paths flowing between tabs in the first power module 905, the second power module 910, and the third power module 915, and tabs in a group of bobbins in the first row of bobbin 971. The different current paths may flow through one or more of the positive DC power busbar 401, the negative DC power busbar 402, and/or the neutral power busbar 403. The flow of current between power modules and capacitors (and/or bobbins) may depend of a two-level or three-level configuration functionality of the hybrid capacitor assembly 900.

For example, in a three-level functionality, a current may flow from the neutral tab 921 to the first neutral tab 907, a current may flow from the first positive tab 906 to the positive tab 922, a current may flow from the first neutral tab 907 to the neutral tab 932, a current may flow from the negative tab 931 to the first negative tab 908, a current may flow from the neutral tab 921 to the second neutral tab 912, a current may flow from the second positive tab 911 to the positive tab 922, a current may flow from the second neutral tab 912 to the neutral tab 932, a current may flow from the negative tab 931 to the third negative tab 918, a current may flow from the neutral tab 921 to the third neutral tab 917, a current may flow from the third positive tab 916 to the positive tab 922, a current may flow from the negative tab 931 to the third negative tab 918, and a current may flow from the third neutral tab 917 to the neutral tab 932, but embodiments are not limited thereto and the hybrid capacitor assembly 900 may be configured to have current paths between power modules and capacitors (and/or bobbins) flowing in different paths.

For example, in a two-level functionality, a current may flow from the negative tab 926 to the first negative tab 908, a current may flow from the negative tab 926 to the second negative tab 913, a current may flow from the negative tab 926 to the third negative tab 918, a current may flow from the first positive tab 906 to the positive tab 927, a current may flow from the second positive tab 911 to the positive tab 927, and a current may flow from the third positive tab 916 to the positive tab 927, but embodiments are not limited thereto and the hybrid capacitor assembly 900 may be configured to have current paths between power modules and capacitors (and/or bobbins) flowing in different paths.

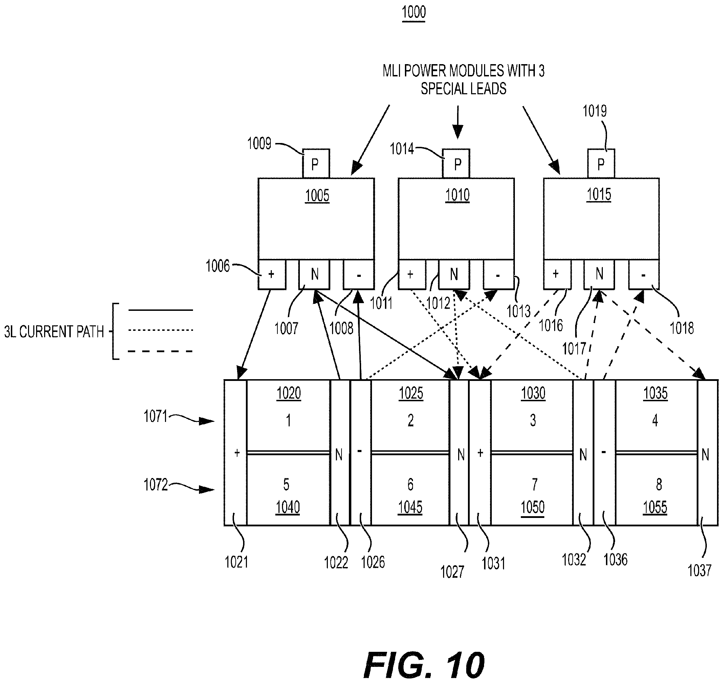

FIG. 10 depicts a full three-level capacitor assembly with a two-row bobbin configuration, according to one or more embodiments. Capacitor assembly 1000 may correspond to an internal configuration of inverter 110. Capacitor assembly 1000 may include a first row of bobbins 1071, a second row of bobbins 1072, a first power module 1005, a second power module 1010, and a third power module 1015. The first row of bobbins 1071 may include a first bobbin 1020, a second bobbin 1025, a third bobbin 1030, and a fourth bobbin 1035. The second row of bobbins 1072 may include a fifth bobbin 1040, a sixth bobbin 1045, a seventh bobbin 1050, and an eighth bobbin 1055. The first bobbin 1020 and the fifth bobbin 1040 may include a positive tab 1021 and a neutral tab 1022. The second bobbin 1025 and the sixth bobbin 1045 may include a negative tab 1026 and a neutral tab 1027. The third bobbin 1030 and the seventh bobbin 1050 may include a positive tab 1031 and a neutral tab 1032. The fourth bobbin 1035 and the eighth bobbin 1055 may include a negative tab 1036 and a neutral tab 1037. The first power module 1005 may include a first positive tab 1006, a first neutral tab 1007, a first negative tab 1008, and a first output tab 1009. The second power module 1010 may include a second positive tab 1011, a second neutral tab 1012, a second negative tab 1013, and a second output tab 1014. The third power module 1015 may include a third positive tab 1016, a third neutral tab 1017, a third negative tab 1018, and a third output tab 1019.

Bobbins in the first row of bobbins 1071 and the second row of bobbins1072 may be configured to provide a three-level functionality, but embodiments are not limited thereto. The first power module 1005, the second power module 1010, and the third power module 1015 may be generic multi-level inverter (MLI) power modules with three special leads (or tabs), but embodiments are not limited thereto.

As depicted in FIG. 10, the capacitor assembly 1000 may be configured to have different current paths flowing between tabs in the first power module 1005, the second power module 1010, and the third power module 1015, and tabs in a group of bobbin in the first row of bobbins 1071 and a group of bobbins in the second row of bobbins 1072. The different current paths may flow through one or more of the positive DC power busbar 401, the negative DC power busbar 402, and/or the neutral power busbar 403. The flow of current between power modules and capacitors (and/or bobbins) may depend of a three-level configuration functionality of the capacitor assembly 1000.

For example, in a three-level functionality, a current may flow from the first positive tab 1006 to the positive tab 1021, a current may flow from the neutral tab 1022 to the first neutral tab 1007, a current may flow from the first neutral tab 1007 to the neutral tab 1027, a current may flow from the negative tab 1026 to the first negative tab 1008, a current may flow from the negative tab 1026 to the second negative tab 1013, a current may flow from the second positive tab 1011 to the positive tab 1031, a current may flow from the second neutral tab 1012 to the neutral tab 1027, a current may flow from the neutral tab 1032 second neutral tab 1012, a current may flow from the third positive tab 1016 to the positive tab 1031, a current may flow from the neutral tab 1032 to the third neutral tab 1017, a current may flow from the negative tab 1036 to the third negative tab 1018, and a current may flow from the third neutral tab 1017 to the neutral tab 1037, but embodiments are not limited thereto and the capacitor assembly 1000 may be configured to have current paths between power modules and capacitors (and/or bobbins) flowing in different paths.

In one or more embodiments, a capacitor may be used in a three-level inverter functionality. In one or more embodiments, a single capacitor may replace two capacitors (e.g., C1 and C2) in a multi-level inverter configuration, with a single solution for a three-level functionality, which may facilitate a lower parasitic inductance by integration of two capacitors (e.g., C1 and C2) into a single bulk capacitor. In one or more embodiments, a bulk capacitor may include a planar busbar configuration to connect capacitors.

In one or more embodiments, a single hybrid solution capacitor may allow a two-level and/or a three-level inverter functionality, which may replace three capacitors (e.g., C1, C2, and C3) in a T-type configuration multi-level inverter. In one or more embodiments, a single hybrid solution capacitor may include both a two-level and/or a three-level functionality, which may facilitate a lower parasitic inductance by integration of three capacitors (e.g., C1, C2, and C3) into a single bulk capacitor. In one or more embodiments, a bulk capacitor may include a planar busbar configuration to connect capacitors.

One or more embodiments may include an integration of two capacitors (e.g., C1 and C2) in one capacitor assembly. One or more embodiments may include an arrangement of capacitors connected to a combination of three planar busbars, for example, one positive DC power busbar, one negative DC power busbar, and one neutral power busbar, in a single DC bulk capacitor to allow planar arrangement of busbars for a three-level functionality, which may result in a reduction of parasitic inductance.

One or more embodiments may include a three planar busbar arrangement in a bulk capacitor, which may allow capacitors to connect to positive, negative, and neutral power busbars, which may facilitate three-level functionality configurations. In one or more embodiments, capacitors may be arranged to enable a full three-level functionality. In one or more embodiments, capacitors may have different configurations based on manufacturing constraints and/or designs, as well as on provided current paths. One or more embodiments may include one or more rows of capacitors.

One or more embodiments may provide solutions for a three-level DC link capacitor (or bulk capacitor). One or more embodiments may provide a DC link capacitor that can be manufactured using same (or similar) processes used to manufacture some two-level capacitors, which may be beneficial for manufacturing purposes. One or more embodiments may include a DC link capacitor that may be flexible and scalable for different voltage levels, capacitance values, and number of inverter levels.

One or more embodiments may provide a DC link capacitor that may be combined with a power switch to result in a relatively low parasitic inductance, which may enable higher (or relatively higher) switching speeds in a complete commutation loop. One or more embodiments may use a smaller space to combine two capacitors (e.g., C1 and C2) into a single DC bulk capacitor than a space used to arrange two separate capacitors, which may result in simplifying busbar routing and reduced parasitic inductances.

One or more embodiments may include a three-level capacitor functionality in a single bulk capacitor assembly. One or more embodiments may include capacitors arrangement for obtaining a three-level functionality, while considering a shorter current path, as well as potential mechanical constraints provided by manufacturers. One or more embodiments may include a planar busbar arrangement for three-level inverters with connections of bulk capacitor capacitors.

One or more embodiments may include an integration of three capacitors (e.g., C1, C2, and C3) in one capacitor assembly. One or more embodiments may include an arrangement of capacitors connected to a combination of three planar busbars, for example, one positive DC power busbar, one negative DC power busbar, and one neutral power busbar, in a single DC bulk capacitor, which may allow planar arrangement of busbars that may allow a two-level functionality and/or a three-level functionality, which may result in a reduction of parasitic inductance.

One or more embodiments may include a bulk capacitor with a first row of capacitors and/or a second row of capacitors. One or more embodiments may include a three planar busbar arrangement that may allow capacitors in a first row and/or second row to connect positive, negative, and neutral power busbars, which may facilitate different two-level functionality and/or three-level functionality configurations. One or more embodiments may include a capacitors configuration that may allow integration of capacitors of different voltage ratings that may depend on a function that may be beneficial to address. For example, a first row of capacitors may address a two-level functionality that may include high voltage rating capacitors, and a second row of capacitors may address a three-level functionality and may include different voltage rated capacitors.

In one or more embodiments, capacitors in a first row may be arranged in an order (e.g., +/-; +/-; +/-) covering a two-level functionality and capacitors in a second row may be arranged to have different configurations based on manufacturing constraints and current path constraints, but embodiments are not limited thereto. For example, one or more embodiments may include a single row of capacitors configuration configured to cover a same functionality as a two row of capacitors configuration. The configuration for a three-level inverter disclosed above is not limited to embodiments disclosed herein. For example, the configuration for a three-level inverter disclosed above may be applied to an N-level inverter. For example, one or more embodiments may include a hybrid capacitor configuration, including several different current paths as disclosed herein.

One or more embodiments may include a solution for a two-level and/or a three-level multi-level inverter (MLI) DC link capacitor (or DC bulk capacitor). One or more embodiments may provide a DC link capacitor (or DC bulk capacitor) that can be manufactured using same (or similar) processes used to manufacture some two-level capacitors, which may be beneficial for manufacturing purposes. One or more embodiments include a DC link capacitor (or DC bulk capacitor) that may be flexible and scalable for different voltage levels, capacitance values, and/or number of inverter levels.

One or more embodiments may provide a DC link capacitor (or DC bulk capacitor) that may be combined with a power switch, which may result in a relatively low parasitic inductance, which may enable higher (or relatively higher) switching speeds in a complete commutation loop. One or more embodiments may use a small (or relatively small) space to combine two-level functionality and/or a three-level functionality in a single DC bulk capacitor, which may reduce parasitic inductances and enable electromagnetic compatibility (EMC) compliance with minimal (or reduced) efforts.

One or more embodiments may include a two-level and/or a three-level capacitor functionality in a single bulk capacitor assembly. One or more embodiments may include capacitors arrangement for obtaining a two-level functionality and/or a three-level functionality, while considering (or including) a shorter current path, as well as potential mechanical constraints provided by manufacturers. One or more embodiments may include a planar busbar arrangement for a multi-level inverter with connections of bulk capacitor capacitors.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system comprising an inverter to convert DC power from a battery to AC power to drive a motor, wherein the inverter includes:
a capacitor assembly including:
a first busbar;
a second busbar;
a third busbar between the first busbar and the second busbar; and
one or more capacitors connected to one or more of the first busbar, the second busbar, or the third busbar.

2. The system of claim 1, wherein the first busbar is a positive DC power busbar, the second busbar is a negative DC power busbar, and the third busbar is a neutral power busbar; and/or
wherein the inverter is a multi-level inverter.

3. The system of any one of claims 1 to 2, wherein the one or more capacitors include:
a first capacitor connected to the first busbar and the third busbar; and
a second capacitor connected to the second busbar and the third busbar.

4. The system of claim 3, wherein the capacitor assembly further includes a case, wherein the first capacitor and the second capacitor are provided in the case; and/or
wherein the first capacitor is arranged in a first row and the second capacitor is arranged in a second row.

5. The system of any one of claims 1 to 4, wherein the inverter further includes:
a power module connected to the capacitor assembly.

6. The system of any one of claims 1 to 5, wherein the one or more capacitors are on a same side of the first busbar, the second busbar, and the third busbar; and/or
wherein the one or more capacitors include a bobbin with a longitudinal axis in the one or more capacitors that is in parallel with a longitudinal axis of each of the first busbar, the second busbar, and the third busbar.

7. The system of any one of claims 1 to 6, further including:
the battery configured to supply the DC power to the inverter; and
the motor configured to receive the AC power from the inverter to drive the motor,
wherein the system is provided as a vehicle including the inverter, the battery, and the motor.

8. A system comprising a capacitor assembly, the capacitor assembly including:
a first busbar;
a second busbar;
a third busbar between the first busbar and the second busbar; and
one or more capacitors connected to one or more of the first busbar, the second busbar, or the third busbar.

9. The system of claim 8, wherein the system further includes a power module connected to the capacitor assembly, and
wherein, preferably, the power module includes a first tab connected to the first busbar, a second tab connected to the second busbar, and a third tab connected to the third busbar.

10. The system of any one of claims 8 to 9, wherein the one or more capacitors include:
a first capacitor and a second capacitor connected to the first busbar and the third busbar, and
a third capacitor and a fourth capacitor connected to the second busbar and the third busbar.

11. The system of any one of claims 8 to 10, wherein:
the first busbar includes a first opening, the second busbar includes a second opening, and the third busbar includes a third opening, and
the one or more capacitors includes a bobbin that extends through the first opening, the second opening, and the third opening and connects to the first busbar.

12. The system of any one of claims 8 to 11, wherein:
the one or more capacitors include a first capacitor, a second capacitor, a third capacitor, and a fourth capacitor; and
each of the first capacitor, the second capacitor, the third capacitor, and the fourth capacitor is connected to the second busbar.

13. A system comprising a busbar assembly for an inverter, the busbar assembly including:
a first busbar;
a second busbar; and
a third busbar between the first busbar and the second busbar.

14. The system of claim 13, wherein the first busbar includes one or more first openings, the second busbar includes one or more second openings, and the third busbar includes one or more third openings;
and preferably wherein:
the first busbar includes a first capacitor connector;
the second busbar includes a second capacitor connector extending through the one or more first openings and the one or more second openings; and
the third busbar includes a third capacitor connector extending through the one or more first openings.

15. The system of claim 13 or 14, wherein:
the first busbar is a positive DC power busbar for the inverter;
the second busbar is a negative DC power busbar for the inverter; and
the third busbar is a neutral power busbar for the inverter.
